(19) 

**Europäisches Patentamt**
**European Patent Office**
**Office européen des brevets**

(11) **EP 4 331 381 A1**

(12) 

# EUROPEAN PATENT APPLICATION
published in accordance with Art. 153(4) EPC

(43) Date of publication:
**06.03.2024 Bulletin 2024/10**

(21) Application number: **22796190.1**

(22) Date of filing: **28.04.2022**

(51) International Patent Classification (IPC):
*A23L 7/196* (2016.01)  *A23L 25/00* (2016.01)
*A23L 23/00* (2016.01)  *A23L 3/10* (2006.01)
*A23L 3/02* (2006.01)  *A23L 3/16* (2006.01)
*B65B 55/14* (2006.01)  *B65B 25/00* (2006.01)

(52) Cooperative Patent Classification (CPC):
**A23L 3/02; A23L 3/10; A23L 3/16; A23L 7/196;**
**A23L 23/00; A23L 25/00; B65B 25/00; B65B 55/14**

(86) International application number:
**PCT/KR2022/006121**

(87) International publication number:
**WO 2022/231358 (03.11.2022 Gazette 2022/44)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **29.04.2021  KR 20210056076**

(71) Applicant: **CJ Cheiljedang Corporation**
**Seoul 04560 (KR)**

(72) Inventors:
 • **OH, Ye Jin**
   **Seoul 04560 (KR)**
 • **JANG, Il Sang**
   **Seoul 04560 (KR)**

 • **KIM, Eun Hye**
   **Seoul 04560 (KR)**
 • **PARK, Hyeong Seon**
   **Seoul 04560 (KR)**
 • **JEONG, Hyo Young**
   **Seoul 04560 (KR)**
 • **CHOI, Hye Mi**
   **Seoul 04560 (KR)**
 • **JEONG, Sung Yoon**
   **Seoul 04560 (KR)**
 • **YOON, In Won**
   **Seoul 04560 (KR)**

(74) Representative: **Handley, Matthew Edward et al**
**Venner Shipley LLP**
**200 Aldersgate**
**London EC1A 4HD (GB)**

(54) **INSTANT YAKBAB HAVING SUPERIOR TASTE, NUTRITIONAL VALUE, AND TEXTURE**

(57) The present application relates to instant rice, and more particularly, to a honey Yakbab in the form of an instant rice, and the instant rice can exhibit sufficient sterilization effect due to microorganisms lower than a threshold value in the final instant rice, even when the instant rice is prepared using raw ingredients that are susceptible to microbial contamination of are difficult to sterilize, and does not cause the problem of deterioration in rice quality that may occur due to strict sterilization, and thus can exhibit excellent texture and taste.

EP 4 331 381 A1

## EP 4 331 381 A1

**Description**

[Technical Field]

The present application relates to instant honey yakbab.

[Background Art]

Cooked grains (Bap) is a staple food in East Asia including Korea, Japan and China, and is a type of food commonly eaten throughout Asia including Southeast Asia and South Asia. In recent years, the number of people consuming the Bap has increased not only in Asia but also in Western countries, and the Bap has now become a popular food even in Western countries. In particular, rice, a main raw ingredient of the Bap, is becoming more popular as it is known that the rice is nutritionally excellent.

Generally, Bap may be cooked and prepared by washing grains such as rice in water, soaking the grains, then removing water and heating the grains. However, in order to cook rice properly, it is important to accurately measure and use the amount of water according to the amount of grains, and depending on heating conditions and methods, the final taste or texture of Bap may vary greatly, and thus skilled skill or experience is required to make Bap above a certain level. Since it is not easy to cook the consistent and high-quality Bap, electric rice cookers have been developed only for the purpose of cooking Bap. Since the Bap is a type of food eaten as a staple food, the Bap needs to be cooked every day or in large quantities, but has a disadvantage that the cooking process is cumbersome and not easy. In particular, with the recent trend of increasing single-person households and developing dining culture, the number of people who want to cook and eat the Bap at home through the cumbersome process is decreasing, and on the contrary, the demand for an instant rice in the form of instant food is increasing.

The instant rice is sold as cooked rice in a package, and thus there is an advantage that consumers who purchase the instant foo may eat the instant food right away, and easily enjoy high-quality Bap through a simple cooking process using a microwave, etc. However, in instant foods that are distributed for a long period of time and stored at room temperature, there is a high need to control microbial contamination through sufficient sterilization. If excessive sterilization conditions are applied to sterilize instant rice, the quality of Bap may be damaged and deteriorated. Therefore, it is an important problem to solve in the field of instant rice to achieve a sterilization effect while maintaining the quality of Bap.

The solving of the above problems becomes more important in instant rice, which uses more raw ingredients other than white rice even in the instant rice. When using raw ingredients that contain a lot of moisture or are susceptible to microbial contamination, sterilization is difficult and quality deterioration due to sterilization is noticeable, so that the need for sterilization and quality control is particularly emerging. In the case of a mixed rice in the form of the instant rice on the market, since raw ingredients vulnerable to microbial contamination are use, even if the sterilization conditions are satisfied, the quality of Bap is significantly reduced to have poor texture and taste in many cases. Korean Laid-open Patent Publication No. 10-2015-0105819 discloses a method for preparing sterile packaged instant flavored glutinous rice containing nuts, and a method of first cooking flavored glutinous rice by mixing raw ingredients, and then heating the rice to high temperature to sterilize and package the rice, and thus, it discloses only a method without considering a problem of deterioration of Bap quality due to sterilization at all. Recently, the convenience food market is gradually increasing, and as the demand for various types of the instant food in addition to the existing white rice Bap increases, a demand for the instant food having similar quality to food cooked at home or in restaurants and a need for development thereof are also increasing.

[Prior Art Document]

[Patent Document]

(Patent Document 1) Korean Laid-open Patent Publication No. 10-2015-0105819

[Disclosure]

[Technical Problem]

The present application relates to an instant rice prepared using raw ingredients that are susceptible to microbial contamination and difficult to sterilize, and an object of the present application is to provide an instant rice having excellent quality with taste, nutritional value, texture, etc. of hot pot rice even while containing less microorganisms than a threshold amount through sufficient sterilization.

[Technical Solution]

An aspect of the present application provides an instant rice including a sealed container: and a Yakbab made from at least one raw ingredient selected from the group consisting of jujubes, chestnuts nuts and raisins, rice, and sauces contained in the container, wherein the raw ingredients other than rice in the Yakbab are contained in an amount of 5 parts by weight to 20 parts by weight based on 100 parts by weight of the contents contained in the container, the nuts are contained in an amount of 7 parts by weight to 18 parts by weight based on 100 parts by weight of the contents contained in the container, and the number of microorganisms in the instant rice is negative within a shelter life.

Hereinafter, the present application will be described in detail.

The term "cooked grains (Bap)" used herein refers to all foods prepared by adding water to grains, pressurizing, and heating the grains. When compared to porridge, the Bap is maintained in the form of grains, characterized to be chewed and eaten, and has a feature of having less moisture than porridge. The Bap may be commonly taken as a staple food in East Asia including Korea and Southeast Asia, and mainly prepared using rice, but may be prepared with other grains instead of rice, or prepared by mixing rice with other grains, or may be prepared using additional ingredients other than grains.

The term "instant rice" used herein means Bap made in the form of an instant food. The instant rice is a processed food that is able to be eaten in itself without a separate cooking process, or eaten through a simpler cooking process than a conventional method of preparing and cooking Bap, and prepared for convenient storage, reposition, transportation, and portability.

The instant rice of the present application includes a sealed container: and a Yakbab made from at least one raw ingredient selected from the group consisting of jujubes, nuts and raisins, rice, and sauces contained in the container, wherein the raw ingredients other than rice in the Yakbab is contained in an amount of 5 parts by weight to 20 parts by weight based on 100 parts by weight of the contents contained in the container, the nuts are contained in an amount of 7 parts by weight to 18 parts by weight based on 100 parts by weight of the contents contained in the container, and the number of microorganisms in the instant rice is negative within a shelter life.

Although the instant rice of the present application is in the form of instant rice, the instant rice may exhibit excellent quality with taste, nutritional value, texture, etc. of hot pot rice. The hot pot rice refers to rice cooked using a pot, and specifically, may be rice cooked in a pressure rice pot or an iron pot, particularly a stone pot, an iron pot such as a cast iron pot, etc., to exhibit more improved texture.

The instant rice of the present application may be prepared in the form of instant rice of whole grain rice, mushroom nutritious rice, honey yakbab, etc. depending on the types and combination of the raw ingredients, specifically Yakbab, and more specifically honey Yakbab.

The instant rice may further include raw ingredients commonly used when preparing the Yakbab, in addition to the raw ingredients listed above.

The "rice" as a raw ingredient used in preparation of Bap may be used with any rice commonly used in the preparation of rice regardless of its type, and may be, for example, japonica or indica rice, but is not limited thereto. In addition, the rice includes white rice, black rice, brown rice, etc. In addition, the rice may be non-glutinous rice, glutinous rice, or a combination thereof. The starch ingredient of the non-glutinous rice may be amylose and amylopectin, and the starch ingredient of the glutinous rice may be amylopectin. Compared to the non-glutinous rice, the glutinous rice may be more sticky when cooking the rice. In addition, the rice may be used regardless of its degree of polishing, and may be 50% polished rice, 70% polished rice, and/or 90% polished rice, in addition to the white rice and brown rice. The types of rice described above may be appropriately selected depending on the type and characteristics of rice to be finally prepared, and the mixing ratio of each type of rice may also be appropriately selected and used.

The nuts may be at least one, at least two, and at least three selected from the group consisting of chestnuts, pine nuts, pumpkin seeds, and peanuts, and any nuts that are commonly used in preparing Yakbab or honey Yakbab may be used for the instant rice of the present application without limitation.

The raw ingredients included in the instant rice of the present application may be susceptible to microbial contamination because the number of microorganisms contained therein is greater than the number of microorganisms contained in other raw ingredients, or may not be sufficiently sterilized through a conventional sterilization process. Specifically, the raw ingredients may have the number of microorganisms of $10^2$ cfu/ml to $10^8$ cfu/ml in the raw ingredients before sterilization, and for example, the number of microorganisms may be in the range of $10^3$ cfu/ml to $10^7$ cfu/ml, 1,500 cfu/ml to 5,000,000 cfu/ml or 1,800 cfu/ml to 4,500,000 cfu/ml. In addition, the number of microorganisms in the raw ingredients before sterilization may be the number of microorganisms measured before sterilizing a mixture of two or more raw ingredients. The number of microorganisms in the raw ingredient mixture before sterilization may be $10^5$ cfu/ml to $10^8$ cfu/ml, and for example, the number of microorganisms in the raw ingredient mixture before sterilization may be 500,000 cfu/ml to 5,000,000 cfu/ml or 550,000 cfu/ml to 1,200,000 cfu/ml. Accordingly, when considering an effect on the health of people who eat instant rice and a legal acceptable level of the number of microorganisms in instant rice, in order to meet the standard by reducing the number of microorganisms contained in instant rice prepared using the raw ingredients, stricter sterilization may be required than when using other raw ingredients. However, when instant rice is prepared through strict sterilization conditions and sterilization methods, microbial contamination may be controlled, but there is a problem that the quality of instant rice may decrease due to the sterilization process. The present application is intended to solve the problems that occur when preparing instant rice using the raw ingredients, and the instant rice of the present application has an effect of not deteriorating the quality of the instant rice even while exhibiting a sufficient sterilization effect.

The sauces are liquid sauces and may be used without limitation as long as the liquid sauces are liquid sauces to be added to impart characteristics such as taste, shape, and physical properties to be implemented in the instant rice of the present application, and specifically, may contain sugars and/or salts. The liquid sauces may be prepared by mixing liquid raw ingredients and/or powdered raw ingredients at a predetermined ratio, and the liquid materials may be soy sauce, vegetable/animal ingredient concentrate, fruit and vegetable paste, honey, oligosaccharide, starch syrup, etc., but are not limited thereto, and the powdered raw ingredients may be salt, sugar, pepper, red pepper powder, etc., but are not limited thereto. For example, the sauces may include soy sauce, garlic, green onions, sugar, salt, sesame oil, honey, or combinations thereof. Specifically, when the instant rice is the honey Yakbab, the sauces may include honey. When the liquid sauces are added in the preparation of instant rice, there is a problem that the quality of the liquid sauces may significantly deteriorate during the process of sterilizing the instant rice using a conventional method. However, although the instant rice of the present application contains the liquid sauces, the quality of the instant rice, including the sauces, is not deteriorated and the number of microorganisms in the instant rice and/or the sauces may be maintained at 0 CFU/ml.

The raw ingredients other than the raw ingredients or rice in the Yakbab may be contained in an amount of 5 parts by weight to 20 parts by weight based on 100 parts by weight of the contents contained in the container. Specifically, the content of the raw ingredients other than rice may be the in the range consisting of a lower limit selected from 5 parts by weight, 5.5 parts by weight, 6 parts by weight, 6.5 parts by weight, 7 parts by weight, 7.5 parts by weight, 8 parts by weight, 8.5 parts by weight, 9 parts by weight, 9.5 parts by weight, and 10 parts by weight and/or an upper limit selected from 20 parts by weight, 19.5 parts by weight, 19 parts by weight, 18.5 parts by weight, 18 parts by weight, 17.5 parts by weight, 17 parts by weight, 16.5 parts by weight, 16 parts by weight. , 15.5 parts by weight, 15 parts by weight, 14.5 parts by weight, 14 parts by weight, 13.5 parts by weight, 13 parts by weight, 12.5 parts by weight, 12 parts by weight, 11.5 parts by weight, 11 parts by weight, and 10.5 parts by weight. For example, the content of the raw ingredients other than rice may be 5 to 20 parts by weight, 6 to 29 parts by weight, 7 to 18 parts by weight, 8 to 17 parts by weight, 7 to 16.5 parts by weight, 8 to 16 parts by weight, 9 to 15.5 parts by weight, or 10 to 15 parts by weight, but is not limited thereto.

The nuts may be contained in an amount of 7 parts by weight to 18 parts by weight based on 100 parts by weight of the contents contained in the container. Specifically, the content of the nuts may be in the range consist of a lower limit selected from 7 parts by weight, 7.5 parts by weight, 8 parts by weight, 8.5 parts by weight, and 9 parts by weight and/or an upper limit selected from 18 parts by weight, 17.5 parts by weight, 17 parts by weight, 16.5 parts by weight, 16 parts by weight, 15.5 parts by weight, 15 parts by weight, 14.5 parts by weight, 14 parts by weight, 13.5 parts by weight, 13 parts by weight, 12.5 parts by weight, 12 parts by weight parts, 11.5 parts by weight, 11 parts by weight, 10.5 parts by weight, 10 parts by weight, and 9.5 parts by weight. For example, the content of the nuts may be 7 to 18 parts by weight, 7.5 to 17.5 parts by weight, 8 to 17 parts by weight, 8.5 to 16.5 parts by weight, 9 to 16 parts by weight, 9 to 15.5 parts by weight or 8.5 to 15 parts by weight, but is not limited thereto. The present application is an instant rice in the form of Yakbab, which has an effect of simultaneously implementing sufficient sterilization and excellent rice quality, while containing a relatively high content of 7 to 18 parts by weight of nuts that are difficult to sterilize.

The non-glutinous rice may be added in an amount of 10 parts by weight to 20 parts by weight based on 100 parts by weight of the contents when preparing the instant food of the present application. Specifically, the content of the non-glutinous rice may be in the range consisting of a lower limit selected from 10 parts by weight, 10.5 parts by weight, 11 parts by weight, 11.5 parts by weight, 12 parts by weight, 12.5 parts by weight, 13 parts by weight, 13.5 parts by weight, 14 parts by weight, 14.5 parts by weight, and 15 parts by weight, and/or an upper limit selected from 20 parts by weight, 19.5 parts by weight, 19 parts by weight, 18.5 parts by weight, 18 parts by weight, 17.5 parts by weight, 17 parts by weight, 16.5 parts by weight, 16 parts by weight, and 15.5 parts by weight. For example, the content of the non-glutinous rice may be 10 to 20 parts by weight, 11 to 19 parts by weight, 12 to 18 parts by weight, 13 to 17 parts by weight, 14 to 16 parts by weight, 14 to 15.5 parts by weight, or 15 to 15.5 parts by weight, but is not limited thereto.

The glutinous rice may be added in an amount of 55 parts by weight to 65 parts by weight based on 100 parts by weight of the contents when preparing the instant rice of the present application. Specifically, the content of the glutinous rice may be in the range consisting of a lower limit selected from 55 parts by weight, 56 parts by weight, 57 parts by weight, 58 parts by weight, 59 parts by weight, 60 parts by weight, 61 parts by weight, and 62 parts by weight, and/or an upper limit selected from 65 parts by weight, 64.5 parts by weight, 64 parts by weight, 63.5 parts by weight, 63 parts by weight, 62.5 parts by weight, and 62 parts by weight. For example, the content of the glutinous rice may be 55 to 65 parts by weight, 56 to 64.5 parts by weight, 57 to 64 parts by weight, 58 to 63.5 parts by weight, 59 to 63 parts by weight, 60 to 62.5 parts by weight, or 61 to 62.5 parts by weight, but is not limited thereto.

The chestnuts may be added in an amount of 8 parts by weight to 18 parts by weight based on 100 parts by weight of the contents when preparing the instant food of the present application. Specifically, the content of the chestnuts may be in the range consisting of a lower limit selected from 8 parts, 9 parts, 10 parts, 11 parts, 12 parts, 13 parts and 13.5 parts by weight, and/or an upper limit selected from 18 parts, 17 parts, 16 parts, 15 parts by weight, 14 parts by weight, and 13.5 parts by weight. For example, the content of the chestnuts may be 8 to 18 parts by weight, 9 to 17 parts by weight, 10 to 16 parts by weight, 11 to 15 parts by weight, 12 to 14 parts by weight, 13 to 13.5 parts by weight or 13.5 to 14 parts by weight, but is not limited thereto.

In addition, the pumpkin seeds may be added in an amount of 0.5 parts by weight to 3.5 parts by weight based on 100 parts by weight of the contents when preparing the instant food of the present application. Specifically, the content of the pumpkin seeds may be in the range consisting of a lower limit selected from 0.5 parts by weight, 0.7 parts by weight, 1 part by weight, 1.2 parts by weight, 1.5 parts by weight, 1.7 parts by weight and 1.9 parts by weight and/or an upper limit selected from 3.5 parts by weight, 3.3 parts by weight, 3 parts by weight, 2.8 parts by weight, 2.5 parts by weight, 2.3 parts by weight, and 2 parts by weight. For example, the content of the pumpkin seeds may be 0.5 to 3.5 parts by weight, 0.7 to 3.3 parts by weight, 1 to 3 parts by weight, 1.5 to 2.5 parts by weight, 1.7 to 2.3 parts by weight, or 1.9 to 2 parts by weight, but is not limited thereto.

In addition, the raisins may be added in an amount of 1.5 parts by weight to 4.5 parts by weight based on 100 parts by weight of the contents when preparing the instant food of the present application. Specifically, the content of the raisins may be in the range consisting of a lower limit selected from 1.5 parts by weight, 1.7 parts by weight, 2 parts by weight, 2.2 parts by weight, 2.5 parts by weight, 2.7 parts by weight and 2.9 parts by weight, and/or an upper limit selected from 4.5 parts by weight, 4.3 parts by weight, 4 parts by weight, 3.8 parts by weight, 3.5 parts by weight, 3.3 parts by weight and 3 parts by weight. For example, the content of the raisins may be 1.5 to 4.5 parts by weight, 2 to 4 parts by weight, 2.2 to 3.8 parts by weight, 2.5 to 3.5 parts by weight, 2.7 to 3.3 parts by weight, or 2.9 to 3 parts by weight, but is not limited thereto.

In addition, the pine nuts may be added in an amount of 0.5 parts by weight to 1.5 parts by weight based on 100 parts by weight of the contents when preparing the instant food of the present application. Specifically, the content of the pine nuts may be in the range consisting of a lower limit selected from 0.5 part by weight, 0.6 part by weight, 0.7 part by weight, 0.8 part by weight, 0.9 part by weight and 1 part by weight, and/or an upper limit selected from 1.5 parts by weight, 1.4 parts by weight, 1.3 parts by weight, 1.2 parts by weight, 1.1 parts by weight, and 1 part by weight. For example, the content of the pine nuts may be 0.5 to 1.5 parts by weight, 0.6 to 1.4 parts by weight, 0.7 to 1.3 parts by weight, 0.8 to 1.2 parts by weight, 0.9 to 1.1 parts by weight, 0.9 to 1 part by weight, or 1 to 1.1 parts by weight, but is not limited thereto.

The instant rice may be negative during bacteria growth test for microorganisms more specifically general bacteria and heat-resistant bacteria, within a shelf life. Alternatively, the instant rice may be sterile for microorganisms within the shelter life, more specifically general bacteria and heat-resistant bacteria. Alternatively, the instant rice may have 0 cfu/ml of microorganisms, more specifically general bacteria and heat-resistant bacteria, within the shelter life. Accordingly, the instant rice of the present application has an advantage of exhibiting a sufficient sterilization effect without deteriorating the quality of the raw ingredients and/or sauces included in the instant rice. In addition, the number of microorganisms in the instant rice may be 0 CFU/ml when measured at 9 months or less after the preparation of instant rice, and specifically, the number of microorganisms measured at 1 month or less, 2 months or less, 3 months or less, 6 months or less, or 9 months or less after the preparation may be 0 CFU/ml.

The chromaticity of the Bap parts of the instant rice of the present application before heating in a microwave may have L value of 33.5 to 36, a value of 5.5 to 6.5, and b value of 13.5 to 14.5. Specifically, the L value may be 33.5 to 36, 34 to 35.5, or 34.5 to 35, the a value may be 5.5 to 6.5, 5.7 to 6.3, or 5.9 to 6, and the b value may be 13.5 to 14.5, 13.7 to 14.3, or 14 to 14.1. As the chromaticity of the Bap portion in the instant rice of the present application corresponds to the range, it is possible to provide instant rice with a color that better matches the color preference of consumers. In the field of food technology to which the present application pertains, the color of food corresponds to a factor that plays an important role in consumer's preference and choice along with taste quality. In particular, the instant rice of the present application is characterized by a relatively higher L value and/or b value compared to instant rice prepared by a conventional preparing method using the same ingredients.

The chromaticity of the rice part in the instant rice measured after heating the instant rice of the present application in a 700 W microwave for 1 minute to 3 minutes, 1 minute 30 seconds to 2 minutes 30 seconds, more specifically 2 minutes may have L value of 27 to 29, a value of 6.5 to 7, and b value of 10 to 11. Specifically, the L value may be 27 to 29, 27 to 28.5, or 27 to 28, the a value may be 6 to 7.5, 6.5 to 7, or 6.6 to 6.8, and the b value may be 10 to 11, 10.2 to 10.8 or 10.4 to 10.5. As the chromaticity range of Bap part in the instant rice of the present application corresponds to the above range, it is possible to provide instant rice with a color that better matches the color preference of consumers. In the field of food technology to which the present application pertains, the color of food corresponds to a factor that plays an important role in consumer's preference and choice along with taste quality.

The instant rice of the present application may have one or more, two or more, or three or more of the following physical properties obtained by measuring the Bap in the Yakbab included in the container using a physical property analyzer, after heating the instant rice in a 700 W microwave for 1 minute to 3 minutes and 1 minute 30 seconds to 2 minutes 30 seconds, more specifically for 2 minutes: (i) hardness of 15 to 35; (ii) elasticity of 40 to 60; (iii) adhesiveness of 25 to 40; and (iv) glutinousness of 65 to 105.

Specifically, the instant rice of the present application may have the following physical properties obtained by measuring the rice in the Yakbab included in the container using a physical property analyzer, after heating the instant rice in a 700 W microwave for 1 minute to 3 minutes and 1 minute 30 seconds to 2 minutes 30 seconds, more specifically for 2 minutes: (i) hardness of 15 to 35; (ii) elasticity of 40 to 60; (iii) adhesiveness of 25 to 40; and (iv) glutinousness of 65 to 105.

More specifically, the physical properties are measured using a physical property analyzer (Tensipresser Analyzer, MyBoy, TAKETOMO Electric Incorporated). Specifically, in order to measure the physical properties, texture profile analysis (TPA) is performed using a physical property analyzer, and a TPA curve obtained after 6 bites is used. Specifically, each sample is placed in a holder of a physical property analyzer, and a 30 mm-high plunger moves at a constant force and speed of 2.0 mm/s to apply the force to the sample surface. The load applied to the plunger is measured by continuously applying vertically 240 compression two times, 46% compression two times and 920 compression two times of the sample thickness. The hardness was measured by a peak value when the plunger applies 92% compression of the sample thickness, which represents the force required to chew and crush the Bap. The elasticity was measured by dividing a curve area at 92% compression into a curve area at 240 compression, which means that the higher the elasticity value, the higher the chewed elasticity of the Bap. The adhesiveness may be measured as a negative peak value when the plunger compressed the sample by 920, which represents the force at the moment of removing the plunger stuck to the sample, and means that the larger the measured value, the higher the adhesiveness. The glutinousness may be measured as a negative area when the plunger compresses the sample by 920, and represents a sustained sticking force. Each value was measured repeatedly 5 times and the average values thereof were shown.

Specifically, the hardness may be 15 to 35, 18 to 33 or 20 to 30, the elasticity may be 40 to 60, 44 to 58 or 45 to 55, the adhesiveness may be 25 to 40, 29 to 39 or 30 to 35, and the glutinousness may be 65 to 105, 69 to 104, or 70 to 100.

In addition, the instant rice of the present application may have a deviation in the hardness and/or elasticity measured in the same manner as described above with respect to 3 or more, 4 or more, or 5 or more pieces of instant rice prepared by the same preparing method as the preparing method thereof. Specifically, the deviation in hardness and/or elasticity may be 10 or less, 9 or less, 8 or less, 7 or less, or 6 or less. There is an advantage that the deviation in hardness and/or elasticity measured in the same manner as described above with respect to the instant rice of the present application is smaller than a deviation in hardness and/or elasticity of instant rice prepared by a conventional preparing method using the same material. This may mean that the quality of instant rice products is maintained consistently when prepared using the same preparing method, so that the instant rice of the present application may maintain constant quality even during mass production to be suitable for mass-production.

The sugar content of the sauces before sterilization may be 0 to 60 brix. Specifically, the sugar content of the liquid sauces may be the sugar content in the range consisting of a lower limit selected from 0, 5, 10, 15, 20, 25 and 30 brix and/or an upper limit selected from 60, 55, 50, 45, 40, 35 and 30 brix. For example, the sugar content may be 0 to 60 brix, 5 to 55 brix, 10 to 50 brix, 15 to 45 brix, 20 to 40 brix, 25 to 35 brix, 30 to 35 brix, or 35 to 40 brix, but is limited thereto.

The viscosity of the sauces before sterilization may be 0 to 2,000 cp. Specifically, the viscosity of the sauces may be the viscosity in the range consisting of a lower limit selected from 0, 10, 100, 200, 300, 400, 500, 600, 700, 800, 900, and 1000 cp and/or an upper limit selected from 2,000, 1,900, 1,800, 1,700, 1,600, 1,500, 1,400, 1,300, 1,200, 1,100, and 1,000 cp. For example, the viscosity may be 0 to 2,000 cp, 100 to 1,900 cp, 200 to 1,800 cp, 300 to 1,700 cp, 400 to 1,600 cp, 500 to 1,500 cp, 600 to 1,400 cp, 700 to 1,300 cp, 800 to 1,200 cp, 900 to 1,100 cp, 1,000 to 1,100 cp or 900 to 1,000 cp, but is not limited thereto.

When the sauces have the sugar content and/or viscosity in the range, heat transfer may be difficult during the sterilization process, thereby making it difficult to control microorganisms. However, the instant rice of the present application may exhibit a sufficient sterilization effect even while maintaining the sugar content and/or viscosity range of the sauces. In addition, although the sterilization effect of viscous liquids is not large by a general liquid sterilization method, the instant rice of the present application has an advantage of exhibiting a sufficient sterilization effect of the viscous sauces as described above.

The sealed container may be prepared by attaching a sterilized lid material, for example, a UV sterilized lid material, to the container, and may further include injecting inert gas into the container before sealing. The attaching of the container may be performed using heat, an adhesive, or pressure, but is not limited thereto. The container and the lid material may be used without limitation in shape, material, size, etc., as long as the container and the lid material may be commonly used in the preparation of instant food, and may be a container and a lid material that are not deformed or damaged even by heating. For example, the lid material may be a lead film, but is not limited thereto. After the sealing process, external foreign substances or microorganisms may not be introduced into the container by a natural method, so that microbial contamination may be controlled, and sterile conditions are not to be necessarily maintained in the subsequent steps.

The instant rice of the present application may be prepared by sterilizing at least one selected from the group consisting of jujubes, nuts and raisins contained in the container and rice, more specifically immersed rice under the condition of a F0 value of 4 or higher; adding sterilized sauces to the sterilized raw ingredients; sealing the container added with the sauces; and heating the sealed container to a temperature of 90°C to 125°C for 10 to 25 minutes.

The raw ingredients, rice, sauces, etc. are the same as the ingredients contained in the instant rice, and the following description incorporates the above parts.

The instant rice of the present application may be prepared by sterilizing the raw ingredients contained in the container under the condition of an F0 value of 4 or higher before sealing the container. In addition, the instant rice may be prepared through the step of adding the sterilized water or sterilized sauces to the sterilized raw ingredients. In addition, the instant rice may be prepared through the step of sealing the container added with the water or sauces. In addition, the instant rice may be prepared through the step of heating the sealed container to a temperature of 90°C to 125°C for 10 minutes to 25 minutes.

The instant rice of the present application may be prepared through the step of liquid-sterilizing the water or sauces by directly spraying steam into the water or sauces.

The liquid-sterilizing may be performed for 6 to 8 minutes by directly spraying the steam at 130°C to 140°C into the sauces. Specifically, the steam temperature may be a temperature in the range consisting of a lower limit selected from 130°C, 130.5°C, 131°C, 131.5°C, 132°C, and 132.5°C, and/or an upper limit selected from 140°C, 139°C, 138°C, 137°C, 136°C, 135°C, 134.5°C, 134°C, 133.5°C, 133°C, and 132.5°C. For example, the sterilization may be performed with steam at 130°C to 140°C, 130.5°C to 138°C, 131°C to 136°C, 131.5°C to 135°C, 132°C to 133°C, 132.5°C to 135°C or 130° to 132.5°C, but is not limited thereto. The sterilization of the water or sauce may be performed by spraying and injecting the steam at the above temperature directly into the water or sauce to raise the temperature, and then passing the water or sauce through a pipe that maintains heat for 6 to 8 minutes. Specifically, the sterilization time after the steam injection may be 6 minutes to 8 minutes, 6 minutes 30 seconds to 8 minutes, 6 minutes to 7 minutes 30 seconds, 6 minutes 30 seconds to 7 minutes 30 seconds, 7 minutes to 8 minutes, or 6 minutes to 7 minutes.

The liquid-sterilizing of the water or sauces may be performed using a Direct-Steam Injection (DSI) sterilization device. The liquid-sterilizing may be performed by setting the temperature and time conditions of the DSI sterilization device.

In the case of instant rice containing liquid sauces with a predetermined range of viscosity and/or sugar content, a possibility of microbial contamination problems is relatively greater, and there is a possibility that quality deterioration of instant rice and/or sauces may occur when prepared according to a general preparation method of instant rice. However, the instant rice of the present application is prepared through the method as described above, so that there is an advantage that colors that match the consumer's preference may be exhibited or deviations between products during mass production may not occur even while microorganisms may be completely controlled.

In the present application, the term "F value" refers to the time required to kill a specific microbial strain at a specific temperature, which may be calculated through a heat lethal time curve for the microorganism. The F value may be determined according to a Z value and a heating temperature according to a type of microorganism to be sterilized. Among them, "F0 value" may be defined as the F value when a Z value is 18°F or 10°C and the heating temperature is 250°F or 121.1°C. The Z value of 10°C is based on the value when sterilizing a standard microbial strain. The F0 value is a value that may be used as a measure of the level of sterilization in the art. Specifically, the F0 value may be measured by a probe of a sensor, which is a cumulative amount of heat transferred to a sample during the heat treatment time. For example, the F0 value may be measured by inserting the probe of the sensor into a cold point (a point where heat is transferred last within the sample or generally the center of the sample) in the sample and then checking the cumulative amount of heat to be transferred during heat application, and may be converted and calculated by setting the amount of heat corresponding to 121.1°C and 1 minute to 'F0 = 1'.

The instant rice of the present application may be prepared through the step of sterilizing the raw ingredients contained in the container under the condition of an F0 value of 4 or higher. At this time, when describing the meaning of sterilization under the condition of 'F0 value = 4' as an example, according to the definition of the F0 value, it means sterilizing standard microorganisms with Z value of 10°C to a level that may kill the microorganisms when sterilization is performed at a temperature of 121.1°C for 4 minutes. The F0 value may be calculated according to Equation 1 below.

[Equation 1]

$$F_0 = t(time) \times 10^{\frac{T(Temperature) - 121.1°C}{10°C}}$$

wherein, the unit of t (time) is minute, and the unit of T (temperature) is °C.

Specifically, the sterilizing step may be performed at an F0 value of 4 or more, 4.5 or more, 5 or more, 6 or more, 7 or more, 8 or more, 10 or more, 20 or more, 30 or more, or 40 or more, but is not limited thereto. When the sterilization is performed under a condition in the range of the F0 value or more, as instant rice is prepared through the subsequent steps, the number of microorganisms contained in the final instant rice product may fall below a threshold value to exhibit a sufficient sterilization effect.

The sterilizing step may be performed using at least one method selected from the group consisting of pressurized steam sterilization, vacuum pressurized steam sterilization, and ultra-high temperature sterilization, but is not limited thereto, and any sterilization method can be used as long as it can satisfy the condition of the F0 value of 4 or more. Specifically, the sterilizing step may be performed using a pressure sterilizer (Shinwha, Japan), a vacuum pressure sterilizer (RIC device, Hisaka, Japan), or an ultra-high pressure sterilizer (Echico, Japan), but is not limited thereto. More specifically, the sterilizing step may be performed by directly applying steam to the raw ingredients, and may be performed using a vacuum pressurized steam sterilization method. The vacuum pressurized steam sterilization may be performed sequentially by vacuum, steam sterilization, reduced pressure, and vacuum cooling, for example, the vacuum pressurized sterilizer may be used. More specifically, the raw ingredients may be placed in the vacuum pressurized sterilizer, and then subjected subsequently to steam sterilization, reduced pressure, and vacuum cooling after the interior of the vacuum pressurized sterilizer is made in a vacuum state. The raw ingredients may be raw ingredients filled in an unsealed container. The interior of the vacuum pressurized sterilizer is made in the vacuum state before steam sterilization, thereby achieving heat transfer efficiency (rapid heat transfer) and homogeneity during steam sterilization.

The sterilizing step may be performed with steam at 120°C to 140°C for 1 to 10 minutes. Specifically, the steam temperature may be a temperature in the range consisting of a lower limit selected from 120°C, 121°C, 122°C, 123°C, 124°C, 125°C, 126°C, 127°C, 128°C, 129°C, and 130°C, and/or an upper limit selected from 140°C, 139°C, 138°C, 137°C, 136°C, 135°C, 134°C, 133°C, 132°C, 131°C, and 130°C. For example, the sterilizing step may be performed with steam at 120°C to 140°C, 121°C to 139°C, 122°C to 138°C, 123°C to 137°C, 124°C to 136°C, 125°C to 135°C, 126°C to 134°C, 127°C to 133°C, 128°C to 132°C, 129°C to 131°C, 129°C to 130°C or 130°C to 131°C, but is not limited thereto. The sterilization time may be the time in the range of a lower limit selected from 1 minute, 2 minutes, 3 minutes, 4 minutes, 4 minutes and 30 seconds, 5 minutes, 5 minutes and 30 seconds, 6 minutes, 6 minutes and 30 seconds and 7 minutes, and/or an upper limit selected from 10 minutes, 9 minutes 30 seconds, 9 minutes, 8 minutes 30 seconds, 8 minutes, 7 minutes 30 seconds, 7 minutes, 6 minutes 30 seconds, and 6 minutes. For example, the sterilization may be performed for 1 minute to 10 minutes, 2 minutes to 9 minutes, 3 minutes to 8 minutes, 4 minutes to 7 minutes, 5 minutes to 6 minutes, 5 minutes 30 seconds to 6 minutes, 5 minutes to 5 minutes 30 seconds, 6 minutes to 10 minutes, 7 minutes to 10 minutes, or 7 minutes to 9 minutes, but is not limited thereto, and the sterilization time may vary within the above range depending on the volume of raw ingredients to be sterilized. For example, when preparing the instant rice in a volume suitable for one meal per person, the sterilization time may be generally 4 minutes to 6 minutes, and when preparing the instant rice in a larger volume than the volume for one meal per person, the sterilization time may be increased to a range of 7 minutes to 10 minutes and may be appropriately changed depending on the volume.

In addition, the sterilizing step may be performed by repeatedly contacting the raw ingredients 5 to 10 times with steam at 140°C to 155°C for 3 to 10 seconds. Specifically, the steam temperature may be in the range consisting of a lower limit selected from 140°C, 142°C, 145°C, and 147°C and/or an upper limit selected from 155°C, 153°C, 150°C, and 148°C. For example, the sterilization may be performed with steam at 140°C to 155°C, 142°C to 153°C, 145°C to 150°C, 145°C to 148°C, 147°C to 150°C or 147°C to 148°C, but is not limited thereto. The steam contacting time may be the time consisting of a lower limit selected from 3 seconds, 4 seconds, 5 seconds and 6 seconds and/or an upper limit selected from 10 seconds, 9 seconds, 8 seconds and 7 seconds. For example, the steam contacting time may be 3 seconds to 10 seconds, 4 seconds to 9 seconds, 5 seconds to 8 seconds, 6 seconds to 8 seconds, 5 seconds to 7 seconds, or 6 seconds to 7 seconds, but is not limited thereto. The contacting of the raw ingredients with the steam may be repeated 5 to 10 times, 6 to 9 times, 6 to 8 times, 7 to 9 times, or 7 to 8 times.

The instant rice of the present application may further include a step of immersing the raw ingredients in water, before containing the raw ingredients in the container. The immersing step may include washing the raw ingredients with water, and for example, the raw ingredients may be immersed for 20 minutes to 80 minutes by adding 200 parts by weight to 300 parts by weight of water with respect to total 100 parts by weight of the washed raw ingredients, but it is not limited thereto. The immersing step may be generally performed in the same manner as a process of soaking grains in water when cooking and preparing Bap.

After the immersing step, a step of removing water may be further performed before containing the raw ingredients in the container. As a result of performing the step of removing water, before the sterilizing step, 0 to 10 parts by weight of water based on 100 parts by weight of the raw ingredient may be contained together in the container.

The instant rice of the present application includes a step of adding sterilized water or sterilized sauce to the sterilized raw ingredients after the sterilizing step, wherein the amount of sterilized water to be added may be used without limitation as long as the amount of water is within the range used generally when preparing rice. For example, after water is added, sterilized water may be added so that the amount of water may be added to be 30 parts by weight to 120 parts by weight based on 100 parts by weight of raw ingredients, specifically 30 parts by weight to 110 parts by weight, 40 parts by weight to 105 parts by weight, 50 parts by weight to 100 parts by weight, 60 parts by weight to 95 parts by weight, or 70 parts by weight to 90 parts by weight. Considering the amount of water contained in the container as a result of immersing the raw ingredients in water and then removing the water, the amount of water may be added by appropriately adjusting so that the amount of water within the above range may be ultimately contained in the container.

The instant rice of the present application may be prepared without a cooking step. Specifically, the instant rice may be prepared without a cooking step after the sterilizing step and before the sealing step. The cooking step generally refers to a process of heating the raw ingredients of Bap in the process of preparing rice, and for example, may be a step of heating to 90°C to 120°C. Since the method for preparing the instant rice of the present application does not include a cooking step, there is an effect capable of reducing the number of times of heating the raw ingredients and preventing the quality of the instant rice from being deteriorated by heating. In addition, before sealing the container, since microorganisms may be introduced into the container, sterile conditions need to be observed to prevent microbial contamination, but when the cooking step is not included before the sealing step, there is an advantage that a process that have to comply with sterile conditions may be shortened or the time to be maintained in sterile conditions may be reduced. Accordingly, there is an effect capable of reducing the cost of creating sterile conditions and lowering the possibility of microbial contamination.

The instant rice of the present application may be prepared without applying heat above 90°C before the sealing step after the sterilization step. Specifically, the heat of 90°C or more, 96°C or more, 97°C or more, 98°C or more, 99°C or more, 100°C or more, 102°C or more, 105°C or more, 110°C or more, 120°C or more, 90°C to 120°C, 97°C to 117°C, 99°C to 120°C, 100°C to 117°C, 105°C to 115°C, or 115°C to 120°C, but it is not limited thereto. Since the instant rice of the present application is prepared without the step of heating in the above temperature range before the sealing step, there is an effect capable of reducing the number of times of heating the raw ingredients and preventing the quality of the instant rice from being deteriorated by heating. In addition, since microorganisms may be introduced into the container before sealing the container, sterile conditions need to be observed to prevent microbial contamination, but when the step of heating in the above temperature range is not included before the sealing step, there is an advantage that the time to be maintained in sterile conditions may be reduced. Accordingly, there is an effect capable of reducing the cost of creating sterile conditions and lowering the possibility of microbial contamination.

The meaning of "not applying heat" is a concept of including not only not applying heat in the above temperature range at all, but also temporarily applying heat in the temperature range for a short period of time ultimately to the same level as not applying heat according to common sense in the art. For example, even if the temporary heating is performed, it is included in the scope of the present application so long as no significant sterilization effect occurs or no change in Bap quality occurs. For example, the not applying heat may include applying heat in the above temperature range within 1 second, 2 seconds, 3 seconds, 5 seconds, 10 seconds, or 20 seconds, and may also include applying heat in the above temperature range two times or more for a short period of time.

The instant rice of the present application may be prepared by maintaining the temperature of 89°C or less before the sealing step after the sterilization step. Specifically, the temperature may be maintained at 89°C or lower, 88°C or lower, 87°C or lower, 85°C or lower, 80°C or lower, 75°C or lower, 70°C or lower, 10°C to 89°C, 15°C to 88°C, 20°C to 85°C, 25°C to 80°C, 20°C to 70°C, 20°C to 60°C or 20°C to 50°C, but is not limited thereto. In the method for preparing the instant rice of the present application, as the temperature in the range is maintained before the sealing step, there is an effect capable of reducing the number of times of heating the raw ingredients and preventing the quality of the instant rice from being deteriorated by heating. In addition, before sealing the container, since microorganisms may be introduced into the container, sterile conditions need to be observed to prevent microbial contamination, but when the temperature in the range is maintained before the sealing step, there is an advantage that the time to be maintained in sterile conditions may be reduced. Accordingly, there is an effect capable of reducing the cost of creating sterile conditions and lowering the possibility of microbial contamination.

The meaning of "maintaining the temperature" is a concept including not only that the temperature in the range is continuously maintained without interruption in time, but also that a temperature condition higher than the temperature range is temporarily given for a short period of time, that is, ultimately the same case as that the temperature is maintained continuously according to the common general technical knowledge in the art. For example, even if the temperature condition higher than the temperature range is temporarily given, it is included in the scope of the present application so long as no significant sterilization effect occurs or no change in rice quality occurs. For example, the temperature condition higher than the temperature range may be given for the time within 1 second, within 2 seconds, within 3 seconds, within 5 seconds, within 10 seconds, or within 20 seconds, and the temperature condition higher than the temperature range may be given twice or more for a short period of time.

The instant rice of the present application may be prepared by performing the sterilizing step to the sealing step while the sterile conditions are maintained. Since the container contained with sterilized raw ingredients and the like may be contaminated from external biological particles such as microorganisms and other non-living particles before sealing, there is a need to perform each process under controlled conditions of the contaminant particles floating in the air. The method of maintaining the sterile conditions may be applied without limitation as long as it is a method and condition commonly applied to the production of foods in the art, and specifically, the sterile conditions commonly applied to the preparation of processed foods, instant foods, retort foods, etc. may be applied. The sterile conditions may be maintained by performing each step in a clean room or clean booth, and for example, the process from the completion of the sterilization step to the start of the sealing step may be performed in a tunnel-shaped booth. In this case, the inflow of microorganisms may be prevented through clean air generated from a clean air generator (for example, a HEPA filter) installed in the booth, and the inside of the booth may be maintained at positive pressure.

The instant rice of the present application may be prepared by heating the sealed container to a temperature of 90°C to 125°C for 10 minutes to 25 minutes. Specifically, the heating temperature may be a temperature in the range consisting of a lower limit selected from 90°C, 91°C, 92°C, 93°C, 94°C, 95°C, 96°C, 97°C, 98°C, 99°C, 100°C, 105°C, 107°C, 110°C, 112°C and 115°C and/or an upper limit selected from 125°C, 124°C, 123°C, 122°C, 121°C, 120°C, 119°C, 118°C, 117°C, 116°C and 115°C. For example, the heating may be performed at a temperature of 90°C to 125°C, 91°C to 125°C, 92°C to 124°C, 93°C to 124°C, 94°C to 123°C, 95°C to 123°C, 95°C to 122°C, 95°C to 121°C, 96°C to 121°C, 97°C to 121°C, 100°C to 120°C, 105°C to 119°C, 107°C to 118°C, 110°C to 115°C, 110°C to 118°C, 110°C to 116°C, or 112°C to 116°C, but is not limited thereto. The sterilization time may be a time in the range consisting of a lower limit selected from 10 minutes, 11 minutes, 12 minutes, 13 minutes, 14 minutes, 15 minutes, 16 minutes, 17 minutes, 18 minutes, 19 minutes and 20 minutes, and/or an upper limit selected from 25 minutes, 24 minutes, 23 minutes, 22 minutes, 21 minutes, and 20 minutes. For example, the heating may be performed for 10 minutes to 25 minutes, 11 minutes to 24 minutes, 12 minutes to 23 minutes, 15 minutes to 22 minutes, 17 minutes to 21 minutes, 19 minutes to 20 minutes, 20 minutes to 21 minutes, 12 minutes to 17 minutes, 13 minutes to 16 minutes, 18 minutes to 23 minutes, 19 minutes to 22 minutes, or 19 minutes to 21 minutes, but is not limited thereto. The temperature range and the time range may vary depending on the types of raw ingredients.

When the heating is performed according to the temperature range and the time, there is an advantage of enabling more complete microbial control by exhibiting additional sterilization effects. In addition, through the heating process under the conditions, the instant rice of the present application reaches a level similar to that of Bap prepared through the preparing process of conventional Bap to have the quality of Bap suitable for eating, and prevent the deterioration of the quality of Bap due to an excessive heating condition, thereby preparing instant rice with excellent quality.

The number of microorganisms in the raw ingredients measured after the heating step may be 0 cfu/ml. In the raw ingredients included in the instant rice prepared by the method for preparing the instant rice of the present application, general bacteria and heat-resistant bacteria are all killed, so that the number of microorganisms may be 0 cfu/ml. Accordingly, the instant rice of the present application has an advantage of exhibiting a sufficient sterilization effect without deteriorating the quality of the raw ingredients included in the instant rice.

In other words, instant rice of the present application may be easy to cook and store as an instant food, and also may have a texture and taste quality similar to Bap prepared through a general rice recipe at home or in a restaurant. In addition, even if raw ingredients that are susceptible to microbial contamination or are not easy to sterilize are used, it is possible to prepare an instant rice in which the number of microorganisms may be controlled through sufficient sterilization and the quality of Bap does not deteriorate due to sterilization.

The temperature conditions of the heating step may be lower than the heating temperature for conventional retort sterilization, and specifically, may be lower than a retort sterilization heating temperature commonly used in preparing conventional instant rice. In addition, the temperature conditions of the heating step may be higher than the heating temperature during 'steaming', which is performed to transfer heat to the inside of the food in the general cooking process of Bap.

The heating step may be performed in a general retort apparatus by setting the temperature and time conditions to the above range, but is not limited thereto.

The instant rice of the present application may be prepared by further including a step of cooling and drying after the heating step, and further include inspecting the appearance and condition of the prepared instant rice and/or packaging one or more instant rice. The cooling step may be cooling by natural wind, but is not limited thereto, and the inspecting step may be visual inspection or sampling inspection, but is not limited thereto.

[Advantageous Effects]

According to the present application, even if the instant food is prepared using the liquid sauces that are susceptible to microbial contamination and difficult to sterilize, the quality (e.g. viscosity, sugar content, etc.) of the liquid sauces may not be damaged by sterilization while the number of microorganisms in the liquid sauces is lowered to a threshold amount or less through sufficient sterilization and the problem of reduced quality caused due to strict sterilization does not occur, and thus it is possible to provide instant food having excellent quality with taste, nutritional value, texture, etc. of hot pot rice.

In addition, compared to a general method for preparing instant rice, there are advantages in terms of cost and microbial safety by using a new preparing principle to minimizing changes in quality by reducing the number of heating times, and to simplify the time or steps to be performed by maintaining sterile conditions.

However, the effects of the present application are not limited to the above-mentioned effects, and other effects not mentioned will be clearly understood by those skilled in the art from the following description.

[Best Mode]

Hereinafter, the present application will be described in detail by Examples.

However, the following Examples specifically illustrate the present application, and the content of the present application is not limited by the following Examples.

**<Examples and Comparative Examples>**

**Example 1: Honey Yakbab**

Honey Yakbab of Example 1 was prepared using liquid sauces such as honey, soy sauce, and syrup, and various ingredients. Specifically, non-glutinous rice, glutinous rice, sugared chestnuts, pumpkin seeds, raisins, pine nuts and sesame oil were used as the raw ingredients, and corn oil was added to the raw ingredients washed with water to be filled into the container. The mixing ratio of each raw ingredient was listed in Table 1 below. The filled container was moved to an RIC device (manufactured by Hisaka Seisakusho company), and steam pressure sterilization was performed at a temperature of 130°C for 5 minute and 30 seconds in a vacuum state. The sterilization conditions correspond to sterilization conditions in which an F0 value is 4 or more.

[Table 1]

| Ingredients | Mixing ratio (%) |
|---|---|
| Non-glutinous rice | 15.5 |
| Glutinous rice | 62.0 |
| Sugared chestnuts | 13.8 |
| Pumpkin seeds | 1.9 |
| Raisins | 2.9 |
| Pine nuts | 1.0 |
| Sesame oil | 1.0 |
| Corn oil | 1.9 |
| Total | 100.00 |

After sterilization of the raw ingredients was completed, a liquid sauce with a salt content of 0.9% and a sugar content of 28 brix was prepared by mixing cinnamon concentrate, dark soy sauce, honey, simple syrup, brown sugar, oligosaccharide HF and refined salt, which was sterilized to be added to the container. The liquid sauce was sterilized by directly injecting steam at a temperature of 130°C into the sauce using a direct steam injection heater (DSI) to raise the sauce temperature to 130°C and maintain the state for 6 minutes. After adding the liquid sauce, the container was sealed with a lid material to prevent external microorganisms or foreign substances from being introduced into the container. The sealed container was moved to a retort sterilization device and heated by setting conditions of a temperature of 115°C for 20 minutes to prepare the instant rice of Example 1. The temperature and time conditions of the device correspond to a relatively less strict condition compared to conventional retort sterilization conditions.

**Comparative Examples 1 and 2: Honey Yakbab**

Honey Yakbab of Comparative Examples 1 and 2 was prepared using raw ingredients mixed in the mixing ratio according to Table 1 above and a liquid sauce. An instant rice was prepared in the same manner as the method for preparing the honey Yakbab in Example 1, except that some conditions were varied.

In Comparative Example 1, after performing the same method as in Example 1 until the container sealing step, a liquid sauce was sterilized and added through a general liquid sterilization method by heating at 100°C for 10 minutes or more. In addition, an instant rice was prepared under the conventional retort heat sterilization conditions by heating the sealed container in a retort sterilization device at a temperature of 123°C for 18 minutes, instead of the heating step in Example 1.

In Comparative Example 2, a liquid sauce was sterilized using a direct steam injection heater (DSI) under the same conditions as in Example 1 above, but the raw ingredients were sterilized by heating at 98°C for 20 minutes and then sterilized under the condition where F0 was less than 4. After adding the liquid sauce and then sealing the container, an instant rice was prepared under the conventional retort heat sterilization condition by heating the sealed container in a retort sterilization device at a temperature of 123°C for 18 minutes, instead of the heating step in Example 1.

**[Experimental Example 1]**

**[1-1] Comparison of chromaticity of honey Yakbab**

The lid material of the instant rice (honey Yakbab) of Example 1, and Comparative Examples 1 and 2 prepared by adding the liquid sauces such as honey and soy sauce was removed and the colors thereof were measured and compared. In addition, the instant rice of Examples 1 and Comparative Examples 1 and 2 was heated in a microwave (700 W) for 2 minutes, and then the lid material was removed, and the colors thereof were measured and compared. For the colors, L, a, and b values were measured using an instrument manufactured by Konica Minolta company, and each value was measured three times, and average values thereof were shown in Tables 2 and 3 below.

[Table 2]

| Before heating | L | a | b |
|---|---|---|---|
| Example 1 | 34.57 | 5.92 | 14.03 |
| Comparative Example 1 | 33.13 | 5.84 | 13.40 |
| Comparative Example 2 | 36.17 | 5.92 | 13.88 |

[Table 3]

| After heating | L | a | b |
|---|---|---|---|
| Example 1 | 27.91 | 6.67 | 10.45 |
| Comparative Example 1 | 26.51 | 6.47 | 10.08 |
| Comparative Example 2 | 28.16 | 6.83 | 11.02 |

As a result, as can be seen in Tables 2 and 3 above, in the case of the honey Yakbab in Example 1 of the present application, L value was measured to be relatively low and b value was measured to be high. The honey Yakbab of Example 1 prepared according to the preparation method of the present application may be distinguished from the honey Yakbab of Comparative Examples 1 and 2 in terms of color.

**[1-2] Analysis of cooked rice taste of honey Yakbab**

With respect to instant food (honey Yakbab) of Example 1 and Comparative Examples 1 and 2 heated using a microwave, a cooked rice taste value of each instant rice was shown in Table 4 below by measuring the appearance, hardness, glutinousness, balance, and palatability of the rice grains using a taste meter (Tensipresser My Boy 2 system, Taketomo Electric Co., Japan).

[Table 4]

| | Appearance | Hardness | Glutinousness | Balance | Palatability |
|---|---|---|---|---|---|
| Example 1 | 8.4 | 9.4 | 9.8 | 7.3 | 74 |
| Comparative Example 1 | 8.7 | 9.0 | 9.8 | 7.5 | 78 |
| Comparative Example 2 | 8.7 | 8.9 | 9.8 | 7.4 | 77 |

As a result, in the instant rice of Example 1 prepared according to the preparation method of the present application, the hardness and glutinousness values were measured to be the highest compared to the instant food of the Comparative Examples prepared through other methods.

**[1-3] Analysis of physical properties of honey Yakbab**

With respect to the instant rice (honey yakbab) of Example 1 and Comparative Examples 1 to 2 heated in a microwave, the hardness, elasticity, adhesiveness and glutinousness were measured using a physical property analyzer (Tensipresser Analyzer, MyBoy, TAKETOMO Electric Incorporated).

Specifically, to measure the physical properties, texture profile analysis (TPA) was performed using a physical property analyzer, and a TPA curve obtained after 6 bites was used. Specifically, the load applied to the plunger was measured by placing each sample in a holder of a physical property analyzer, moving a 30 mm-high plunger at a constant force and speed of 2.0 mm/s to apply the force to the sample surface, and applying 24% compression of the sample thickness two times, 460 compression two times and 92% compression two time continuously and vertically. The hardness was measured by a peak value when the plunger applies 92% compression of the sample thickness, which represents the force required to chew and crush the Bap. The elasticity was measured by dividing a curve area at 920 compression by a curve area at 24% compression, which means that the higher the elasticity value, the higher the chewed elasticity of the Bap. The adhesiveness may be measured by a negative peak value when the plunger applies 92% compression to the sample, which represents the force at the moment of removing the plunger stuck to the sample, and means that the larger the measured value, the higher the adhesiveness. The glutinousness may be measured by a negative area when the plunger applies 920 compression to the sample, which represents a sustained sticking force. Each value was repeatedly measured 5 times, and then the average values thereof are calculated.

[Table 5]

|  |  | Hardness | Elasticity | Adhesiveness | Glutinousness |
|---|---|---|---|---|---|
| Example 1 | 1 | 32.04 | 57.30 | 30.99 | 92.82 |
|  | 2 | 27.42 | 54.17 | 33.92 | 70.89 |
|  | 3 | 18.67 | 44.36 | 38.15 | 103.64 |
|  | 4 | 26.64 | 54.59 | 29.63 | 96.46 |
|  | 5 | 20.53 | 49.50 | 30.84 | 69.27 |
|  | Average | 25.06 | 51.98 | 32.71 | 86.62 |
|  | Deviation | 5.43 | 5.10 | 3.43 | 15.60 |
| Comparative Example 1 | 1 | 35.74 | 64.95 | 35.03 | 153.97 |
|  | 2 | 31.98 | 60.28 | 29.18 | 69.40 |
|  | 3 | 24.23 | 50.00 | 37.32 | 92.12 |
|  | 4 | 94.55 | 99.83 | 23.37 | 113.30 |
|  | 5 | 36.48 | 58.04 | 27.33 | 66.25 |
|  | Average | 44.60 | 66.62 | 30.45 | 99.01 |
|  | Deviation | 28.34 | 19.34 | 5.69 | 36.13 |
| Comparative Example 2 | 1 | 28.87 | 59.41 | 37.55 | 106.77 |
|  | 2 | 20.45 | 48.85 | 36.58 | 112.24 |
|  | 3 | 33.98 | 66.04 | 34.97 | 75.73 |
|  | 4 | 57.00 | 105.50 | 21.57 | 75.08 |
|  | 5 | 37.37 | 57.92 | 28.52 | 80.35 |
|  | Average | 35.53 | 67.54 | 31.84 | 90.03 |
|  | Deviation | 13.59 | 22.09 | 6.73 | 17.99 |

As a result, it was confirmed that in the case of the honey Yakbab of Example 1 prepared according to the preparation method of the present application, the measured result values of 1 to 5 samples were relatively uniform and a deviation therebetween was not large, but in the case of the honey Yakbab of Comparative Examples 1 and 2, a deviation in the measured values of physical properties for each sample was very large. In particular, the hardness and elasticity measured values of the honey Yakbab in Comparative Examples 1 and 2 showed very large deviations, but the reason why the deviation between physical property values of the honey Yakbab of Comparative Examples 1 and 2 appears so large is expected to be due to the deviation in texture that occurs due to strong retort heat sterilization treatment. It may be confirmed that this property is a characteristic that appears prominently in the honey Yakbab such as Comparative Examples 1 and 2 having a high content of glutinous rice ingredients, and the Yakbab according to Example 1 does not have a relatively large deviation in physical properties, and thus, in the case of using the preparation method of the present application, it is possible to prepare instant rice with consistent texture and quality.

**[1-4] Sensory evaluation of honey Yakbab**

The instant rice (honey Yakbab) of Example 1, and Comparative Examples 1 and 2 was heated using a microwave and then various sensory qualities were evaluated by trained professional panels. The sensory quality was evaluated by color preference, taste/flavor strength, overall taste preference, texture preference, and glutinousness preference of instant rice, and these properties were shown in Table 5 below. The evaluation criteria for the sensory quality were as follows.

[Evaluation criteria]

Color preference: Provided that 1 point is a minimum value and 5 points are a maximum value, the higher the color preference, the higher the score.

Taste/flavor strength: Provided that 1 point is a minimum value and 5 points are a maximum value, it means that the higher the taste/flavor strength, the higher the score.

Overall taste preference: As it is an item to evaluate the overall taste, provided that 1 point is a minimum value and 5 points are a maximum value, it means that the better the overall taste preference, the higher the score.

Texture preference: Provided that 1 point is a minimum value and 5 points are a maximum value, it means that the higher the texture preference, the higher the score.

Glutinousness preference: Provided that 1 point is a minimum value and 5 points are a maximum value, it means that the higher the glutinousness preference, the higher the score.

[Table 6]

|  | Color preference | Taste/flavor strength | Overall taste preference | Texture preference | Glutinousness preference |
|---|---|---|---|---|---|
| Example 1 | 4.0 | 1.3 | 4.0 | 4. 0 | 4.0 |
| Comparative Example 1 | 3.5 | 1.3 | 3.7 | 3.1 | 3.8 |
| Comparative Example 2 | 3.6 | 1.3 | 3.0 | 2.8 | 3.4 |

As a result, it was confirmed that compared with the honey Yakbab of the Comparative Examples, in the honey Yakbab of Example 1, the color preference, overall taste preference, texture preference, and glutinousness preference all were measured in the highest level to exhibit excellent sensory quality as compared with rice prepared through other methods.

**[Experimental Example 2]**

**Confirmation of the number of microorganisms of honey Yakbab**

In order to confirm whether complete sterilization was performed in the honey Yakbab product of the present application, the number of microorganisms contained in the raw ingredients or product was measured at each step.

With respect to the honey Yakbab according to Example 1, first, the number of general bacteria and the number of heat-resistant bacteria for each of the raw ingredients were measured. The number of each bacterium was measured in non-glutinous rice, glutinous rice, chestnuts, pumpkin seeds, raisins and pine nuts, and the number of microorganisms was measured in a mixed solid material sample mixed with these raw ingredients.

As a result, it was confirmed that all microorganisms that existed in the raw ingredients before sterilization were killed as a result of a steam pressure sterilization using the RIC device, showing a sufficient sterilization effect.

The raw ingredients were included in the container, and then steam pressure sterilization was performed at a temperature of 130°C for 5 minutes and 30 seconds in an RIC device during the process of preparing the honey yakbab according to Example 1, and then a sterilizing effect was confirmed through a microbiology challenge test (MCT). The MCT is a method of determining whether a product has process and distribution stability by artificially inoculating microorganisms and observing trends in order to check whether target bacteria are controlled during the actual process of the product. As general bacteria, an orange capsules (MesaLabs SASU-302) containing $10^6$ CFU/ml of Bacillus subtilis (ATCC 5230), which died under a condition of F0 of about 4 or less, was used, and as heat-resistant bacteria, a purple capsule (MesaLabs SA-608) containing $10^6$ CFU/ml of Geobacillus stearotrhermophilus (ATCC 7953), which died at an F0 of about 21 or less, was used. The raw ingredients sterilized with the RIC device using the capsules were cultured for up to 48 hours at a temperature of 35°C for the orange capsule and 55 to 60°C for the purple capsule, respectively, and then color changes were confirmed. If there was no color change, it was judged negative, and if the color changed to yellow, it was judged positive (Table 5).

As a result, it was confirmed that as a result of steam pressure sterilization using the RIC device, all microorganisms that had been present in the raw ingredients before sterilization were killed to exhibit a sufficient sterilization effect.

[Table 7]

| Measuring sample | Sample name | MCT |
|---|---|---|
| RIC sterilized sample 1 | 4-carriage 1-stage 35°C | Negative |
| RIC sterilized sample 2 | 4-carriage 1-stage 55°C | Negative |
| RIC sterilized sample 3 | 4-carriage 7-stage 35°C | Negative |
| RIC sterilized sample 4 | 4-carriage 7-stage 55°C | Negative |
| RIC sterilized sample 5 | 4-carriage 12-stage 35°C | Negative |
| RIC sterilized sample 6 | 4-carriage 12-stage 55°C | Negative |

Furthermore, after the steam pressure sterilization, a finished instant rice product was prepared through water addition, sealing and additional heating processes, and bacterial growth experiments were conducted on the finished product. In the bacterial growth experiments, the instant rice product was stored at 35°C for 10 days, and then sampled to determine the growth of general bacteria and heat-resistant bacteria according to a common measurement method in the art (based on the bacterial growth experiments according to the general test method of the Ministry of Food and Drug Safety), each finished product sample was preserved in an incubator at a temperature of 35 to 37°C for at least 10 days, and then a specimen obtained from the sample was homogenized with a diluent and cultured in a culture medium at 35 to 37°C for 45 to 51 hours, and then bacterial growth was measured. As a result, as shown in Table 6 below, since no bacterial growth was observed in all 12 instant rice samples, which were shown as negative, despite the presence of a large amount of microorganisms in the raw ingredients, it was confirmed that all microorganisms were killed in the instant rice prepared through the preparing method of the present application through sufficient sterilization.

[Table 8]

| Measuring sample | Sample name (carriage-stage-number) | Bacterial growth |
|---|---|---|
| Finished product sample 1 | 3-2-1 | Negative |
| Finished product sample 2 | 3-2-1 | Negative |
| Finished product sample 3 | 3-2-1 | Negative |
| Finished product sample 4 | 3-2-7 | Negative |
| Finished product sample 5 | 3-2-7 | Negative |
| Finished product sample 6 | 3-2-7 | Negative |
| Finished product sample 7 | 3-2-14 | Negative |
| Finished product sample 8 | 3-2-14 | Negative |

(continued)

| Measuring sample | Sample name (carriage-stage-number) | Bacterial growth |
| --- | --- | --- |
| Finished product sample 9 | 3-2-14 | Negative |
| Finished product sample 10 | 3-3-1 | Negative |
| Finished product sample 11 | 3-3-1 | Negative |
| Finished product sample 12 | 3-3-1 | Negative |

Hereinabove, representative Examples of the present application have been exemplarily described, but the scope of the present application is not limited to the specific Examples as described above, and can be changed appropriately by those of ordinary skill in the art within the scope described in the appended claims of the present application.

## Claims

1. An instant rice, comprising:

   a sealed container; and
   a Yakbab made from at least one raw ingredient selected from the group consisting of jujubes, nuts and raisins, rice, and sauces, contained in the container,
   wherein raw ingredients other than rice in the Yakbab are contained in an amount of 5 parts by weight to 20 parts by weight based on 100 parts by weight of the contents contained in the container,
   the nuts are contained in an amount of 7 parts by weight to 18 parts by weight based on 100 parts by weight of the contents contained in the container, and
   the number of microorganisms in the instant rice is negative within a shelter life.

2. The instant rice of claim 1, wherein the rice is at least one selected from the group consisting of non-glutinous rice and glutinous rice.

3. The instant rice of claim 1, wherein the nuts are at least one selected from the group consisting of chestnuts, pine nuts, pumpkin seeds, and peanuts.

4. The instant rice of claim 1, wherein the sauces comprise at least one selected from the group consisting of soy sauce, garlic, green onions, sugar, salt, sesame oil, and honey.

5. The instant rice of claim 2, wherein the non-glutinous rice is added in a content of 10 parts by weight to 20 parts by weight based on 100 parts by weight of the contents when preparing the instant rice.

6. The instant rice of claim 2, wherein the glutinous rice is added in an amount of 55 parts by weight to 65 parts by weight based on 100 parts by weight of the contents when preparing the instant rice.

7. The instant rice of claim 1, wherein the chromaticity of the rice in the instant rice has L value of 33.5 to 36, a value of 5.5 to 6.5, and b value of 13.5 to 14.5.

8. The instant rice of claim 1, wherein the instant rice is heated in a 700 W microwave for 1 minute to 3 minutes, and then has one or more of following physical properties of the rice in the Yakbab contained in the container measured using a physical property analyzer:

   (i) hardness of 15 to 35;
   (ii) elasticity of 40 to 60;
   (iii) adhesiveness of 25 to 40; and
   (iv) glutinousness of 65 to 105.

9. The instant rice of claim 8, wherein a deviation in the hardness or elasticity measured for three or more instant rice is 10 or less.

**10.** The instant rice of claim 1, wherein the sugar content of the sauces is 0 to 60 brix.

**11.** The instant rice of claim 1, wherein the viscosity of the sauces is 0 to 2,000 cp.

**12.** The instant rice of claim 1, wherein the instant rice is Yakbab.

**13.** The instant rice of claim 1, wherein the instant rice is prepared by sterilizing raw ingredients contained in the container under the condition of an F0 value of 4 or higher before sealing the container.

**14.** The instant rice of claim 13, wherein the instant rice is prepared by heating the sealed container to a temperature of 90°C to 125°C for 10 minutes to 25 minutes.

**15.** The instant rice of claim 13, wherein the instant rice is prepared so that heat of 90°C or higher is not applied before sealing of the container after the sterilizing.

**16.** The instant rice of claim 13, wherein the instant rice is prepared by sterilizing the sauces for 6 to 8 minutes by directly spraying steam at 130°C to 140°C to the sauces.

<div align="center">

**INTERNATIONAL SEARCH REPORT**

</div>

| | International application No. |
|---|---|
| | **PCT/KR2022/006121** |

| **A.** | **CLASSIFICATION OF SUBJECT MATTER** |
|---|---|

**A23L 7/196**(2016.01)i; **A23L 25/00**(2016.01)i; **A23L 23/00**(2016.01)i; **A23L 3/10**(2006.01)i; **A23L 3/02**(2006.01)i; **A23L 3/16**(2006.01)i; **B65B 55/14**(2006.01)i; **B65B 25/00**(2006.01)i

According to International Patent Classification (IPC) or to both national classification and IPC

| **B.** | **FIELDS SEARCHED** |
|---|---|

Minimum documentation searched (classification system followed by classification symbols)

A23L 7/196(2016.01); A23L 1/10(2006.01); A23L 19/00(2016.01); A23L 7/10(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 즉석밥(instant rice), 소스(sauce), 쌀(rice), 약밥(yakbab)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | KR 10-2001-0079456 A (WOOJUNG MULSAN CO., LTD.) 22 August 2001 (2001-08-22)<br>See claim 1; paragraphs [0027] and [0048]; and example 1. | 1-13 |
| Y | | 14-16 |
| Y | JP 5794299 B2 (SATAKE CORPORATION) 14 October 2015 (2015-10-14)<br>See paragraphs [0015], [0023] and [0041]. | 14-16 |
| A | KR 10-0788153 B1 (OTTOGI CORPORATION) 21 December 2007 (2007-12-21)<br>See entire document. | 1-16 |
| A | KR 10-2009-0076465 A (INDUSTRIAL EDUCATION COOPERATION ORGANIZATION, DAEGU HEALTH COLLEGE et al.) 13 July 2009 (2009-07-13)<br>See entire document. | 1-16 |
| A | KR 10-2009-0056531 A (CJ CHEILJEDANG CORPORATION) 03 June 2009 (2009-06-03)<br>See entire document. | 1-16 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 August 2022** | **19 August 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/006121**

| Patent document cited in search report | | | Publication date (day/month/year) | Patent family member(s) | | | Publication date (day/month/year) |
|---|---|---|---|---|---|---|---|
| KR | 10-2001-0079456 | A | 22 August 2001 | None | | | |
| JP | 5794299 | B2 | 14 October 2015 | CN | 103547169 | A | 29 January 2014 |
| | | | | ES | 2443865 | A2 | 20 February 2014 |
| | | | | ES | 2443865 | B2 | 27 April 2015 |
| | | | | ES | 2443865 | R1 | 10 March 2014 |
| | | | | KR | 10-1832722 | B1 | 27 February 2018 |
| | | | | KR | 10-2014-0047605 | A | 22 April 2014 |
| | | | | US | 2014-0109774 | A1 | 24 April 2014 |
| | | | | US | 9854825 | B2 | 02 January 2018 |
| | | | | WO | 2012-140700 | A1 | 18 October 2012 |
| KR | 10-0788153 | B1 | 21 December 2007 | None | | | |
| KR | 10-2009-0076465 | A | 13 July 2009 | None | | | |
| KR | 10-2009-0056531 | A | 03 June 2009 | CN | 101969790 | A | 09 February 2011 |
| | | | | EP | 2211637 | A2 | 04 August 2010 |
| | | | | EP | 2211637 | A4 | 01 February 2012 |
| | | | | EP | 2211637 | B1 | 19 June 2013 |
| | | | | ES | 2427732 | T3 | 31 October 2013 |
| | | | | JP | 2011-505131 | A | 24 February 2011 |
| | | | | KR | 10-0903741 | B1 | 19 June 2009 |
| | | | | US | 2011-0033592 | A1 | 10 February 2011 |
| | | | | WO | 2009-069978 | A2 | 04 June 2009 |
| | | | | WO | 2009-069978 | A3 | 23 July 2009 |

Form PCT/ISA/210 (patent family annex) (July 2019)

**EP 4 331 381 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020150105819